# EUROPÄISCHE PATENTANMELDUNG

(11) **EP 4 635 859 A1**
(43) Veröffentlichungstag der Anmeldung: **22.10.2025**
(21) Anmeldenummer: 25167629.2
(22) Anmeldetag: 01.04.2025
(51) Int. Cl.: B65B 1/28, B65B 69/00, B65G 69/18

(54) **VERFAHREN ZUM ENTLEEREN VON SCHÜTTGÜTERN AUS EINEM ERSTEN BEHÄLTER IN EINEN ZWEITEN BEHÄLTER MIT EINER ENTLEERVORRICHTUNG**

(30) Priorität: 02.04.2024 LU 506775
(71) Anmelder: J. Engelsmann AG, 67059 Ludwigshafen am Rhein (DE)
(72) Erfinder: KRETZU, Christian, 67480 Edenkoben (DE); QUINDT, Viktor, 67433 Neustadt an der Weinstrasse (DE); LIEDTKE, Joachim, 68163 Mannheim (DE)
(74) Vertreter: Habermann Intellectual Property Partnerschaft von Patentanwälten mbB

(57) **Zusammenfassung**

Die Erfindung betrifft ein Verfahren zum Entleeren von Schüttgütern aus einem ersten Behälter (20) in einen zweiten Behälter (21) mit einer Entleervorrichtung (1). Die Schüttgüter werden in einer Füllrichtung von dem ersten Behälter (20) in den zweiten Behälter (21) durch ein schlauchförmiges Verbindungsteil (22) aus einem flexiblen Material entleert. Die Entleervorrichtung (1) weist einen in und entgegen der Füllrichtung verlagerbaren und mit einem Flanschanschluss (3) der Entleervorrichtung (1) in Eingriff bringbaren Ringflansch (4) auf. Der Ringflansch (4) umgreift den Flanschanschluss (3) in einer Entleerposition mit koaxial zueinander angeordneten Ringstegen (5, 6) des Ringflanschs (4) .

## Beschreibung

Die Erfindung betrifft ein Verfahren zum Entleeren von Schüttgütern aus einem ersten Behälter in einen zweiten Behälter mit einer Entleervorrichtung, wobei die Schüttgüter in einer Füllrichtung von dem ersten Behälter in den zweiten Behälter durch ein schlauchförmiges Verbindungsteil aus einem flexiblen Material entleert werden, wobei die Entleervorrichtung einen in und entgegen der Füllrichtung verlagerbaren und mit einem Flanschanschluss der Entleervorrichtung in Eingriff bringbaren Ringflansch aufweist, wobei der Ringflansch den Flanschanschluss in einer Entleerposition mit koaxial zueinander angeordneten Ringstegen des Ringflanschs umgreift, wobei an einem äußeren Ringsteg ein Außenblähdichtring so angeordnet ist, dass der Außenblähdichtring von einer dem Flanschanschluss zugewandten Innenseite des äußeren Ringstegs in Richtung des Flanschanschlusses aufgebläht werden kann, wobei an einem inneren Ringsteg ein Innenblähdichtring so angeordnet ist, dass der Innenblähdichtring von einer dem Flanschanschluss zugewandten Innenseite des inneren Ringstegs in Richtung des Flanschanschlusses aufgebläht werden kann, wobei an einer in der Füllrichtung gesehenen Oberseite des Flanschanschlusses eine Ringnut vorgesehen ist und wobei an einem die Ringnut einseitig begrenzenden ersten Nutsteg ein Nutblähdichtring so angeordnet ist, dass der Nutblähdichtring von einer Innenseite des ersten Nutstegs in Richtung eines dem ersten Nutsteg gegenüberliegenden und die Ringnut einseitig begrenzenden zweiten Nutsteg aufgebläht werden kann, wobei an einer der Oberseite des Flanschanschlusses gegenüberliegenden Unterseite des Ringflansches ein an eine Geometrie der Ringnut so angepasster Eindrücksteg angeordnet ist, dass der Eindrücksteg bei einer Verlagerung des Ringflansches in Richtung des Flanschanschlusses in die Ringnut eingeführt werden kann, wobei der Außenblähdichtring, der Innenblähdichtring, die Ringnut und der Eindrücksteg so ausgebildet und aneinander angepasst sind, dass der Außenblähdichtring und der Innenblähdichtring an den Flanschanschluss in einer Entnahmeposition angedrückt werden kann, bevor der Eindrücksteg in die Ringnut eingreift, wobei zu Beginn eines Umfüllvorgangs der Ringflansch entgegen der Füllrichtung in einer Ausgangsposition beabstandet zu dem Flanschanschluss angeordnet ist, wobei ein Verbindungsteilrest eines bei einem vorangegangenen Entleervorgangs verwendeten Verbindungsteils abschnittsweise in die Ringnut eine Falte bildend eingedrückt und durch eine Aktivierung der Nutblähdichtung zwischen der Nutblähdichtung und dem zweiten Nutsteg dichtend festgelegt ist.

Ein derartige Entleervorrichtung ist aus der Druckschrift DE 10 2019 110 413 B3 bekannt. Gegenüber anderen Entleervorrichtungen aus dem Stand der Technik, bietet diese Entleervorrichtung zahlreiche Vorteile, da durch die verwendeten Blähdichtringe verschiedene Möglichkeiten zur Prozesssteuerung erreicht werden. Dies beruht auf der Erkenntnis, dass eine ausreichende Abdichtung des Verbindungsteils während verschiedener Prozessschritte bereits durch eine Teilaktivierung der jeweiligen Blähdichtringe erreicht werden kann. Bei einer Teilaktivierung wird der Blähdichtring nicht mit dem maximal zur Verfügung stehenden oder zulässigen oder vorgesehenen Druck beaufschlagt, sondern mit einem geringeren Druck. Dieser Teildruck ist so angepasst, dass der Blähdichtring über das Verbindungsteil gleiten kann und gleichzeitig eine ausreichende Dichtwirkung erzielt wird. Diese Erkenntnis kann ausgenutzt werden, um den Prozessablauf vor und nach dem Entleeren so anzupassen, dass ein möglichst zuverlässiger Verfahrensablauf mit einem hohen Automatisierungsgrad und einer hohen Bediensicherheit erreicht wird.

Als Aufgabe der vorliegenden Erfindung wird es angesehen, ein verbessertes Verfahren zum Entleeren mit einer solchen Entleervorrichtung anzugeben.

Diese Aufgabe wird erfindungsgemäß durch ein Verfahren zum Entleeren von Schüttgütern aus einem ersten Behälter in einen zweiten Behälter mit einer wie eingangs beschriebenen Entleervorrichtung gelöst, wobei bei dem Umfüllvorgang folgende Schritte in der vorgegebenen Reihenfolge durchgeführt werden:
- ein sich nach außen von der Entleervorrichtung weg erstreckendes offenes Ende des Verbindungsteilrests wird nach innen in Richtung eines Innenraums der Entleervorrichtung gefaltet;
- ein neues Verbindungsteil wird durch den Ringflansch geführt und mit seinem offenen Ende außen über den Flanschanschluss gestülpt, sodass das neue Verbindungsteil den nach innen gefalteten Verbindungsteilrest umhüllt;
- der Ringflansch wird in Richtung des Flanschanschlusses in die Entnahmeposition verlagert;
- der Außenblähdichtring wird vollaktiviert und das Verbindungsteil dichtend zwischen dem Außenblähdichtring und dem Flanschanschluss festgelegt;
- der Nutblähdichtring wird deaktiviert, sodass der Verbindungsteilrest nicht mehr in der Ringnut festgelegt ist;
- der Verbindungsteilrest wird aus der Entleervorrichtung ausgeschleust;
- der Innenblähdichtring wird teilaktiviert, sodass ein von dem Innenblähdichtring ausgeübter Anpressdruck ausreicht, um eine Dichtwirkung zwischen dem Verbindungsteil und dem Flanschanschluss zu erreichen und gleichzeitig gering genug ist, um den Innenblähdichtring über das Verbindungsteil gleiten lassen zu können;
- der Außenblähdichtring wird deaktiviert oder teilaktiviert;
- der Ringflansch wird weiter in Richtung des Flanschanschlusses verlagert, wobei das Verbindungsteil durch den Eindrücksteg in die Ringnut eine Falte bildend eingedrückt wird;
- der Nutblähdichtring wird vollaktiviert, sodass das Verbindungsteil in der Ringnut unverlagerbar festgelegt ist;
- der erste Behälter wird durch das Verbindungsteil in den zweiten Behälter entleert.

Durch den erfindungsgemäßen Verfahrensablauf können durch den Bediener einfache optische Kontrollen durchgeführt werden, um den Prozessablauf zu kontrollieren. Beim Eindrücken des Verbindungsteils in die Ringnut wird ein Abschnitt des Verbindungsteils in die Ringnut hineinverlagert, sodass sich benachbarte Verbindungsteilabschnitte verkürzen müssen. Dadurch, dass der Innenblähdichtring teilaktiviert wird und der Außenblähdichtring deaktiviert oder auch teilaktiviert wird, wird beim Eindrücken das über den Flanschanschluss gestülpte offene Ende des Verbindungsteils verkürzt. Diese Verkürzung kann von dem Bediener unmittelbar wahrgenommen werden. Dabei kann der Bediener beispielsweise auf eine über den Umfang des Flanschanschlusses gleichmäßige Verkürzung des Verbindungsteils auf eine korrekte Positionierung des Verbindungsteils in der Ringnut schließen. Dadurch, dass das Folienteil von dem offenen Ende her verkürzt wird, kann im Unterschied zu einer Verkürzung von dem ersten Behälter her vermieden werden, dass das Verbindungsteil übermäßig gedehnt wird und dadurch möglicherweise beschädigt wird. Gleichzeitig kann der Bediener einfach überwachen und optisch überprüfen, ob der Überstand des über den Flanschanschluss gestülpten Verbindungsteils ausreichend ist, um auch nach dem Eindrücken in die Ringnut durch den Außenblähdichtring abgedichtet zu werden. Bei dem Verbindungsteil handelt es sich vorteilhafterweise um einen Kunststofffolienschlauch.

Vorteilhafterweise ist erfindungsgemäß vorgesehen, dass der Innenblähdichtring vollaktiviert wird, nachdem das Verbindungsteil durch den Eindrücksteg in die Ringnut eine Falte bildend eingedrückt wurde und bevor der erste Behälter durch das Verbindungsteil in den zweiten Behälter entleert wird. Auf diese Weise kann eine besonders zuverlässige staubdichte Abdichtung der Entleervorrichtung während des Entleerens erreicht werden.

Um die Abdichtung während des Entleerens weiter zu verbessern, ist erfindungsgemäß vorteilhafterweise vorgesehen, dass der Außenblähdichtring teilaktiviert oder vollaktiviert wird, nachdem das Verbindungsteil durch den Eindrücksteg in die Ringnut eine Falte bildend eingedrückt wurde und bevor der erste Behälter durch das Verbindungsteil in den zweiten Behälter entleert wird.

Die Prozesszeit kann dadurch verkürzt werden, dass die Deaktivierung des Nutblähdichtrings gleichzeitig mit der Vollaktivierung des Außenblähdichtrings erfolgt. Außerdem kann die Prozesszeit alternativ oder zusätzlich auch dadurch verkürzt werden, dass die Teilaktivierung des Innenblähdichtrings gleichzeitig mit der Deaktivierung oder Teilaktivierung des Außenblähdichtrings erfolgt.

Vorteilhafterweise ist erfindungsgemäß vorgesehen, dass vor der Vollaktivierung des Nutblähdichtrings der Ringflansch entgegen der Füllrichtung in die Entnahmeposition verlagert wird. Auf diese Weise wird das Verbindungsteil ausschließlich zwischen dem Nutblähdichtring und dem zweiten Nutsteg festgelegt, da der Eindrücksteg aus der Ringnut herausgeführt ist.

Um zu erreichen, dass bei der Verlagerung des Eindrückstegs das Verbindungsteil in der Ringnut verbleibt ist erfindungsgemäß vorgesehen, dass vor der Verlagerung des Ringflansch in die Entnahmeposition der Nutblähdichtring teilaktiviert wird, sodass das Verbindungsteil bei der Verlagerung des Ringflansch in der Ringnut zurückgehalten wird, während der Eindrücksteg aus der Ringnut heraus verlagert wird.

Für eine einfache Kontrolle und zuverlässige Bedienung der Entleervorrichtung durch den Bediener ist erfindungsgemäß vorgesehen, dass das neue Verbindungsteil bis zu einer an einer Außenfläche der Entnahmevorrichtung angebrachten Markierung über den Flanschanschluss gestülpt wird. Auf diese Weise kann einfach sichergestellt werden, dass der Überstand des über den Flanschanschluss gestülpten Verbindungsteils ausreichend ist, um auch nach dem Eindrücken in die Ringnut durch den Außenblähdichtring abgedichtet zu werden.

Damit eine zuverlässige Abdichtung durch den Außenblähdichtring erreicht werden kann, ist erfindungsgemäß vorteilhafterweise vorgesehen, dass ein über den Flanschanschluss hinausragender Endabschnitt des neuen Verbindungsteils mindestens die zweifache Länge einer Tiefe der Ringnut ist.

Um die Entleervorrichtung für den nächsten Entleervorgang vorzubereiten, ist erfindungsgemäß vorgesehen, dass nach dem Entleeren an dem Verbindungsteil entgegen der Füllrichtung beabstandet zu dem Ringflansch ein Verschlusselement angebracht wird, wobei durch das Verschlusselement zwei durch einen Trennabschnitt des Verbindungsteils beabstandete staubdichte Verschlüsse des Verbindungsteils hergestellt werden können. Bei dem Verbindungsteil kann es sich beispielsweise um zwei handelsübliche Kabelbinder handeln, die in einem geringen Abstand zueinander um das Verbindungsteil gelegt und verschlossen werden.

Zum Abschluss des Entleerverfahrens ist erfindungsgemäß vorgesehen, dass das Verbindungsteil in dem Trennabschnitt durchtrennt wird. Hiernach kann das Entleerverfahren mit der Entleervorrichtung erneut durchgeführt werden.

Weitere vorteilhafte Ausgestaltungen des erfindungsgemäßen Verfahrens werden anhand von in der Zeichnung dargestellten Ausführungsbeispielen näher erläutert.

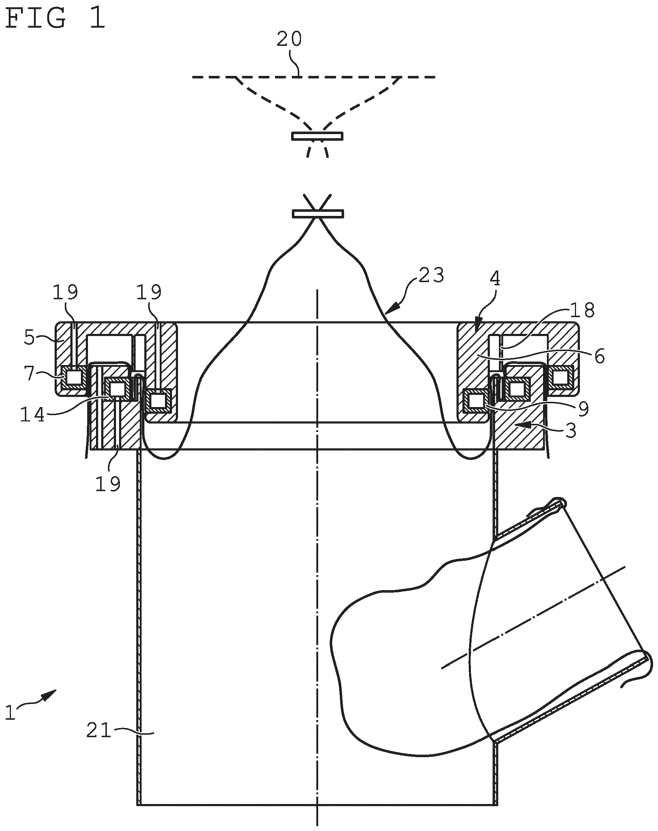

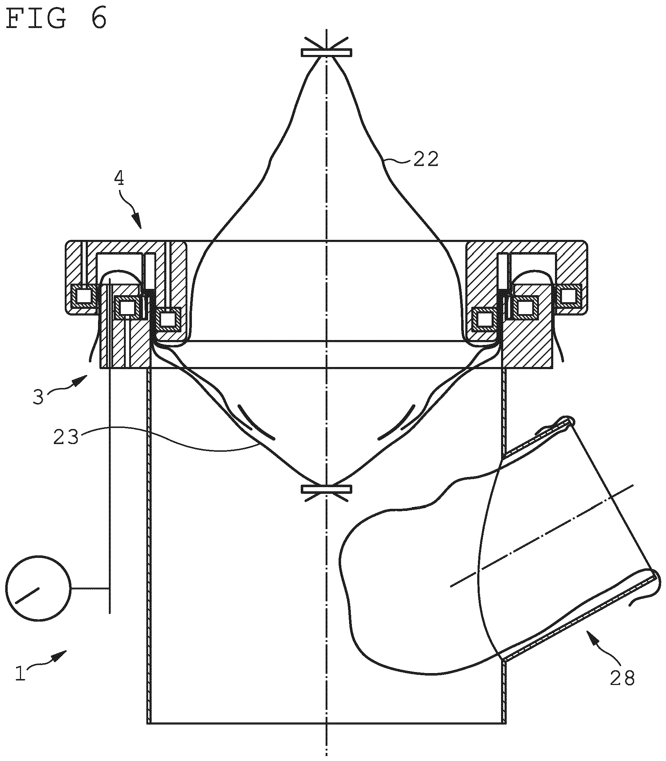

Die Figuren 1 bis 11 wird der Ablauf des erfindungsgemäßen Verfahrens schematisch dargestellt.

In den Figuren 1 bis 11 ist schematisch eine Entleervorrichtung 1 dargestellt. In der Zeichnung sind die verschiedenen Elemente der Entleervorrichtung 1 jeweils in einzelnen Figuren exemplarisch mit einem Bezugszeichen gekennzeichnet.

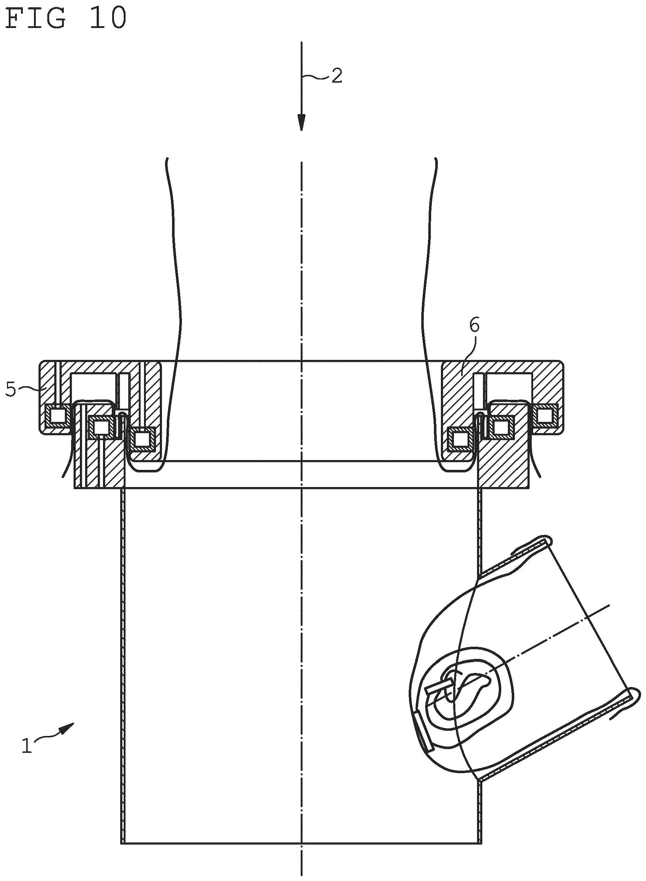

Die Entleervorrichtung 1 weist einen in und entgegen einer in Figur 10 dargestellten Füllrichtung 2 verlagerbaren und mit einem Flanschanschluss 3 der Entleervorrichtung 1 in Eingriff bringbaren Ringflansch 4 auf. Der Ringflansch 4 umgreift den Flanschanschluss 3 in einer in der Figur 10 dargestellten Entleerposition mit koaxial zueinander angeordneten Ringstegen 5, 6 des Ringflanschs 4.

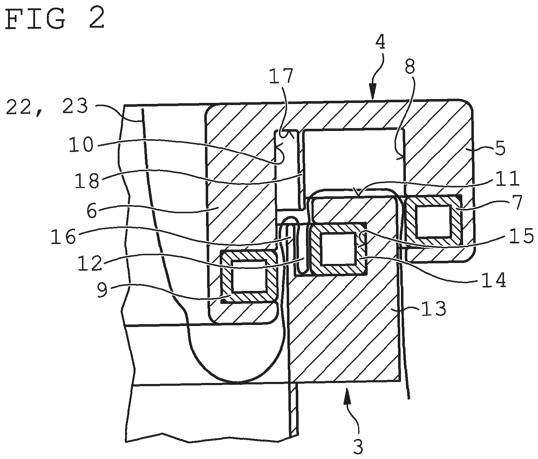

Der im Folgenden erläuterte Aufbau des Flanschanschlusses 3 und des Ringflanschs 4 ist in der in Figur 2 dargestellten Detailansicht des in Figur 1 links dargestellten Teils des Flanschanschlusses 3 und des Ringflanschs 4 gut erkennbar. An einem äußeren Ringsteg 5 ist ein Außenblähdichtring 7 so angeordnet, dass der Außenblähdichtring 7 von einer dem Flanschanschluss 3 zugewandten Innenseite 8 des äußeren Ringstegs 5 in Richtung des Flanschanschlusses 3 aufgebläht werden kann. An einem inneren Ringsteg 6 ist ein Innenblähdichtring 9 so angeordnet, dass der Innenblähdichtring 9 von einer dem Flanschanschluss 3 zugewandten Innenseite 10 des inneren Ringstegs 6 in Richtung des Flanschanschlusses 3 aufgebläht werden kann. An einer in der Füllrichtung 2 gesehenen Oberseite 11 des Flanschanschlusses 3 ist eine Ringnut 12 vorgesehen. An einem die Ringnut 12 einseitig begrenzenden ersten Nutsteg 13 ist ein Nutblähdichtring 14 so angeordnet, dass der Nutblähdichtring 14 von einer Innenseite 15 des ersten Nutstegs 13 in Richtung eines dem ersten Nutsteg 13 gegenüberliegenden und die Ringnut 12 einseitig begrenzenden zweiten Nutsteg 16 aufgebläht werden kann. An einer der Oberseite 11 des Flanschanschlusses 3 gegenüberliegenden Unterseite 17 des Ringflansches 4 ist ein an eine Geometrie der Ringnut 12 so angepasster Eindrücksteg 18 angeordnet, dass der Eindrücksteg 18 bei einer Verlagerung des Ringflansches 4 in Richtung des Flanschanschlusses 3 in die Ringnut 12 eingeführt werden kann. Der Außenblähdichtring 7, der Innenblähdichtring 9, die Ringnut 12 und der Eindrücksteg 18 sind so ausgebildet und aneinander angepasst, dass der Außenblähdichtring 7 und der Innenblähdichtring 9 an den Flanschanschluss 3 in der Entnahmeposition angedrückt werden können, bevor der Eindrücksteg 18 in die Ringnut 12 eingreift. Zur Betätigung der Blähdichtringe 7, 9 und 14 sind in dem Flanschanschluss 3 und dem Ringflansch 4 Druckluftkanäle 19 vorgesehen.

Mit dieser Entleervorrichtung 1 kann das erfindungsgemäße Verfahren zum Entleeren von Schüttgütern aus einem ersten Behälter 20 in einen zweiten Behälter 21 durchgeführt werden. Dabei werden die Schüttgüter in der Füllrichtung 2 von dem ersten Behälter 20 in den zweiten Behälter 21 durch ein schlauchförmiges Verbindungsteil 22 aus einem flexiblen Material entleert.

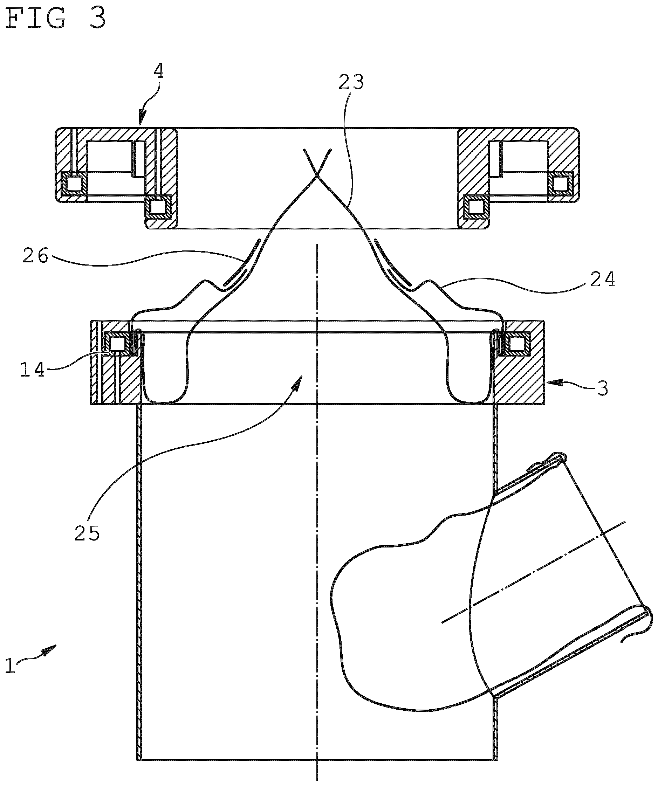

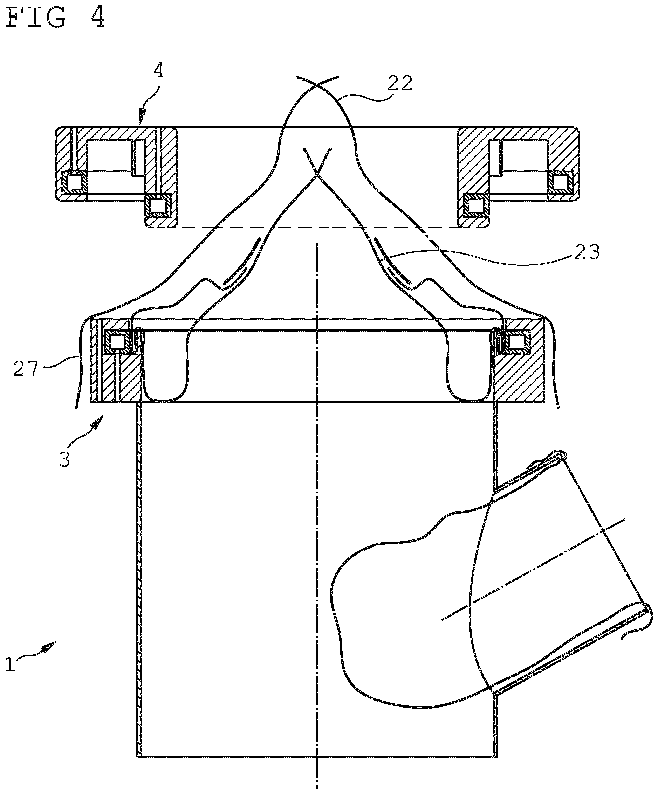

Zu Beginn eines Umfüllvorgangs ist der Ringflansch 4 entgegen der Füllrichtung 2 in einer in den Figuren 3 und 4 dargestellten Ausgangsposition beabstandet zu dem Flanschanschluss 2 angeordnet. Ein Verbindungsteilrest 23 eines bei einem vorangegangenen Entleervorangs verwendeten Verbindungsteils 22 ist abschnittsweise in die Ringnut 12 eine Falte bildend eingedrückt und durch eine Aktivierung der Nutblähdichtung 14 zwischen der Nutblähdichtung 14 und dem zweiten Nutsteg 16 dichtend festgelegt.

Zunächst wird ein sich nach außen von der Entleervorrichtung 1 weg erstreckendes offenes Ende 24 des Verbindungsteilrests 23 nach innen in Richtung eines Innenraums 25 der Entleervorrichtung 1 gefaltet, wie in Figur 3 dargestellt ist. Das offene Ende 24 wird mit einem oder mehreren Klebestreifen 26 an dem übrigen Verbindungsteilrest befestigt, um das offene Ende 24 in der zurückgefalteten Position zu halten.

Anschließend wird wie in Figur 4 dargestellt ein neues Verbindungsteil 22 durch den Ringflansch 4 geführt und mit seinem offenen Ende 27 außen über den Flanschanschluss 3 gestülpt, sodass das neue Verbindungsteil 22 den nach innen gefalteten Verbindungsteilrest 23 umhüllt.

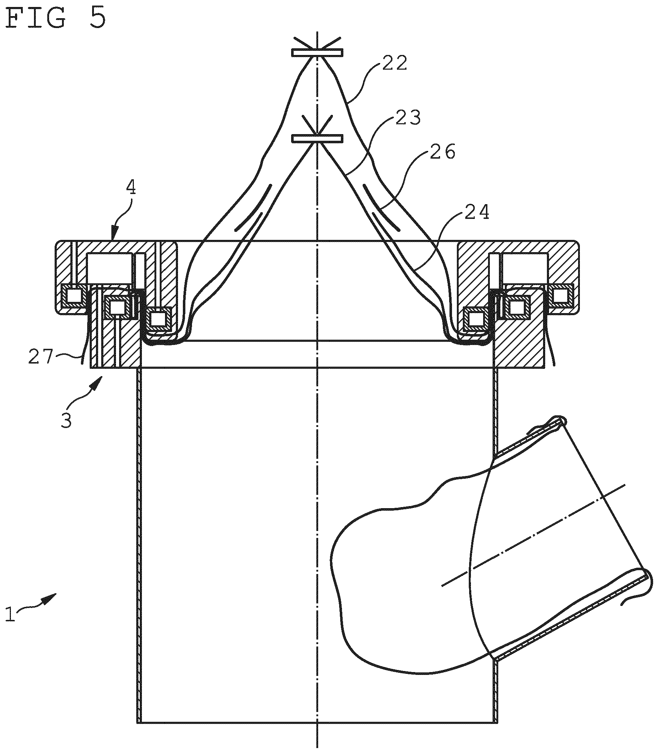

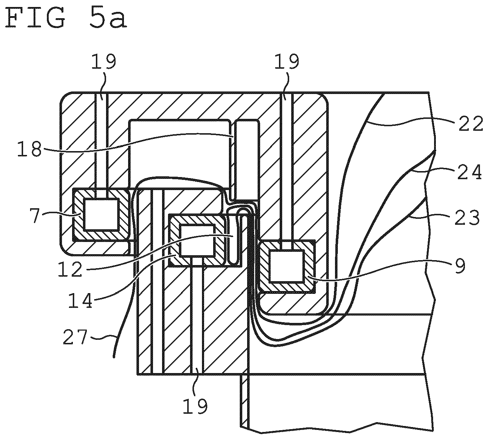

Nachfolgend wird der Ringflansch 4 in Richtung des Flanschanschlusses 3 in die Entnahmeposition verlagert, wie in den Figuren 5 und 5a dargestellt ist. Die Figur 5a zeigt eine Detailansicht des in Figur 5 rechts dargestellten Teils des Flanschanschlusses 3 und des Ringflanschs 4.

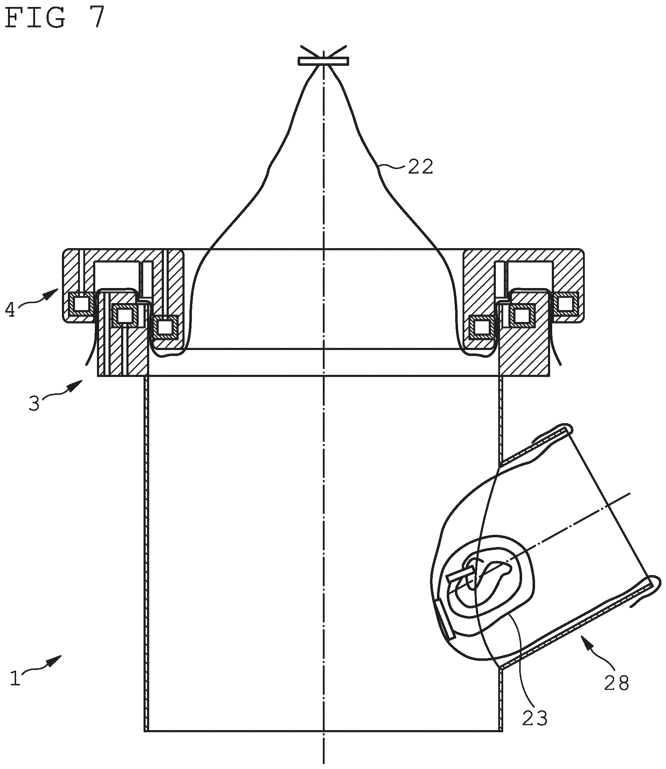

Nun wird der Außenblähdichtring 7 vollaktiviert und das Verbindungsteil 22 dichtend zwischen dem Außenblähdichtring 7 und dem Flanschanschluss 3 festgelegt. Dann wird der Nutblähdichtring 14 deaktiviert, sodass der Verbindungsteilrest 23 nicht mehr in der Ringnut 12 festgelegt ist. Der Verbindungsteilrest 23 wird nun aus der Entleervorrichtung 1 über einen Entnahmestutzen 28 ausgeschleust, wie in Figur 7 dargestellt ist.

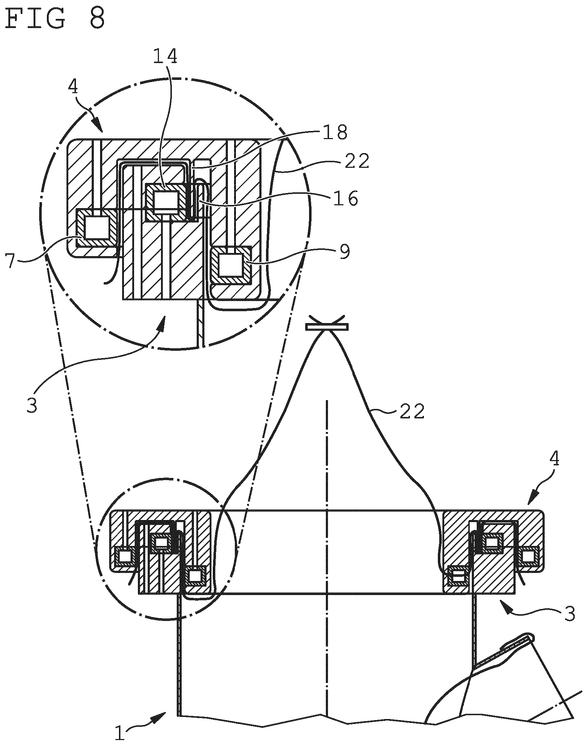

Anschließend wird der Innenblähdichtring 9 teilaktiviert, sodass ein von dem Innenblähdichtring 9 ausgeübter Anpressdruck ausreicht, um eine Dichtwirkung zwischen dem Verbindungsteil 22 und dem Flanschanschluss 3 zu erreichen und gleichzeitig gering genug ist, um den Innenblähdichtring 9 über das Verbindungsteil 22 gleiten lassen zu können. Der Außenblähdichtring 7 wird in dem Ausführungsbeispiel deaktiviert. Anschließend wird der Ringflansch 4 weiter in Richtung des Flanschanschlusses 3 verlagert, wobei das Verbindungsteil 22 durch den Eindrücksteg 18 in die Ringnut 12 eine Falte bildend eingedrückt wird, wie in Figur 8 dargestellt ist.

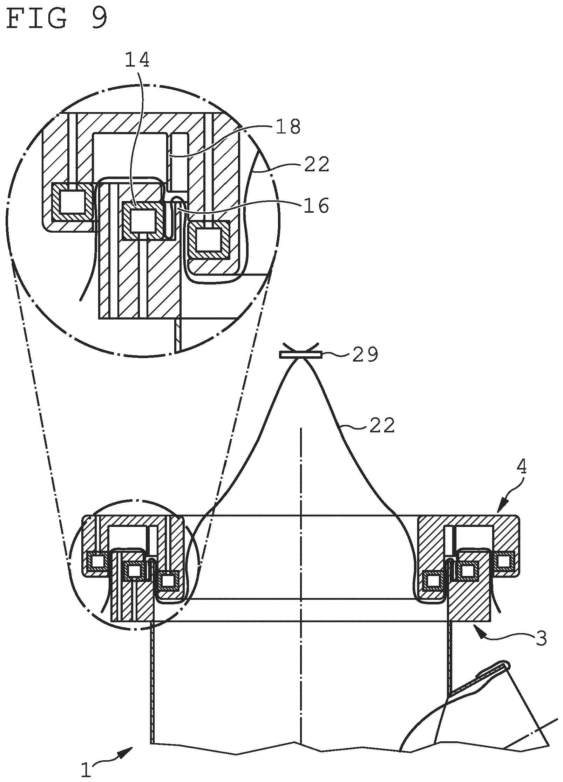

Nun wird Nutblähdichtring 14 teilaktiviert und der Ringflansch 4 entgegen der Füllrichtung 2 in die Entnahmeposition verlagert. Durch die Tailaktivierung des Nutblähdichtrings 14 wird erreicht, dass das Verbindungsteil 22 bei der Verlagerung des Ringflansch 4 in der Ringnut 12 zurückgehalten wird, während der Eindrücksteg 18 aus der Ringnut 12 heraus verlagert wird. Anschließend wird der Nutblähdichtring vollaktiviert, sodass das Verbindungsteil 22 in der Ringnut 12 unverlagerbar festgelegt ist, wie in Figur 9 dargestellt ist. Auf diese Weise wird das Verbindungsteil 22 ausschließlich zwischen dem Nutblähdichtring 14 und dem zweiten Nutsteg 16 festgelegt, da der Eindrücksteg 18 aus der Ringnut herausgeführt ist.

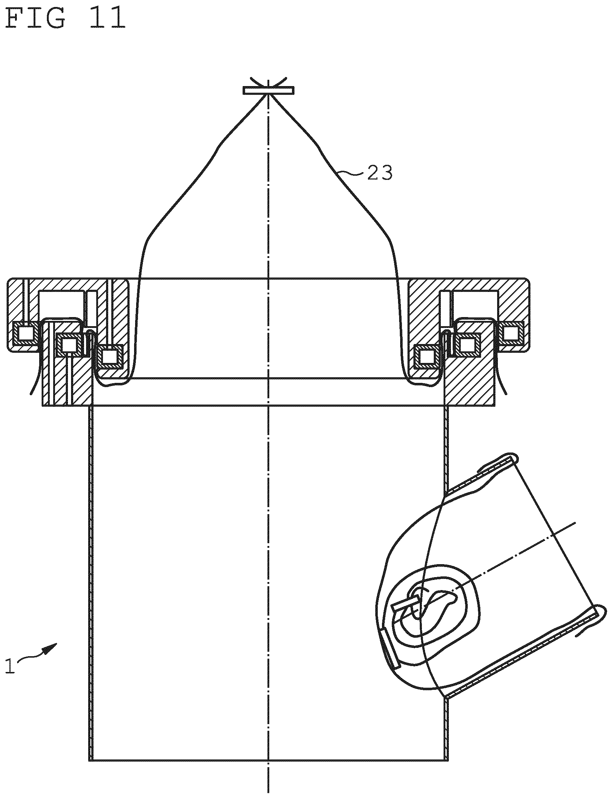

Anschließend wird ein Verschlusselement 29, der eine Strömungsverbindung zwischen dem Verbindungsteil 23 und dem ersten Behälter 20 verschließt geöffnet und der erste Behälter 20 in den zweiten Behälter 21 entleert, wie in Figur 10 dargestellt ist. Nach dem Entleeren wird an dem Verbindungsteil 22 entgegen der Füllrichtung 2 beabstandet zu dem Ringflansch 4 ein neues Verschlusselement 29 angebracht, wobei durch das Verschlusselement 29 zwei durch einen Trennabschnitt des Verbindungsteils 22 beabstandete staubdichte Verschlüsse des Verbindungsteils 22 hergestellt werden können. Anschließend wird das Verbindungsteil 22 in dem Trennabschnitt durchtrennt, sodass ein in der Füllrichtung 2 unterer Teil des Verbindungsteils 22 den Verbindungsteilrest 23 bildet, wie in Figur 11 dargestellt ist. Nun kann das Verfahren erneut durchgeführt werden.

## Patentansprüche

1. Verfahren zum Entleeren von Schüttgütern aus einem ersten Behälter (20) in einen zweiten Behälter (21) mit einer Entleervorrichtung (1), wobei die Schüttgüter in einer Füllrichtung (2) von dem ersten Behälter (20) in den zweiten Behälter (21) durch ein schlauchförmiges Verbindungsteil (22) aus einem flexiblen Material entleert werden, wobei die Entleervorrichtung (1) einen in und entgegen der Füllrichtung (2) verlagerbaren und mit einem Flanschanschluss (3) der Entleervorrichtung (1) in Eingriff bringbaren Ringflansch (4) aufweist, wobei der Ringflansch (4) den Flanschanschluss (3) in einer Entleerposition mit koaxial zueinander angeordneten Ringstegen (5, 6) des Ringflanschs (4) umgreift, wobei an einem äußeren Ringsteg (5) ein Außenblähdichtring (7) so angeordnet ist, dass der Außenblähdichtring (7) von einer dem Flanschanschluss (3) zugewandten Innenseite (8) des äußeren Ringstegs (5) in Richtung des Flanschanschlusses (3) aufgebläht werden kann, wobei an einem inneren Ringsteg (6) ist ein Innenblähdichtring (9) so angeordnet ist, dass der Innenblähdichtring (9) von einer dem Flanschanschluss (3) zugewandten Innenseite (10) des inneren Ringstegs (6) in Richtung des Flanschanschlusses (3) aufgebläht werden kann, wobei an einer in der Füllrichtung (2) gesehenen Oberseite (11) des Flanschanschlusses (3) eine Ringnut (12) vorgesehen ist und wobei an einem die Ringnut (12) einseitig begrenzenden ersten Nutsteg (13) ein Nutblähdichtring (14) so angeordnet ist, dass der Nutblähdichtring (14) von einer Innenseite 15 des ersten Nutstegs (13) in Richtung eines dem ersten Nutsteg (13) gegenüberliegenden und die Ringnut (12) einseitig begrenzenden zweiten Nutsteg 16 aufgebläht werden kann, wobei an einer der Oberseite (11) des Flanschanschlusses (3) gegenüberliegenden Unterseite (17) des Ringflansches (4) ein an eine Geometrie der Ringnut (12) so angepasster Eindrücksteg (18) angeordnet ist, dass der Eindrücksteg (18) bei einer Verlagerung des Ringflansches (4) in Richtung des Flanschanschlusses (3) in die Ringnut (12) eingeführt werden kann, wobei der Außenblähdichtring (7), der Innenblähdichtring (9), die Ringnut (12) und der Eindrücksteg 18 so ausgebildet und aneinander angepasst sind, dass der Außenblähdichtring (7) und der Innenblähdichtring (9) an den Flanschanschluss (3) in einer Entnahmeposition angedrückt werden kann, bevor der Eindrücksteg (18) in die Ringnut (12) eingreift, wobei zu Beginn eines Umfüllvorgangs der Ringflansch (4) entgegen der Füllrichtung (2) in einer Ausgangsposition beabstandet zu dem Flanschanschluss (3) angeordnet ist, wobei ein Verbindungsteilrest (23) eines bei einem vorangegangenen Entleervorgangs verwendeten Verbindungsteils (22) abschnittsweise in die Ringnut (12) eine Falte bildend eingedrückt und durch eine Aktivierung der Nutblähdichtung (14) zwischen der Nutblähdichtung (14) und dem zweiten Nutsteg (16) dichtend festgelegt ist, wobei bei dem Umfüllvorgang folgende Schritte in der vorgegebenen Reihenfolge durchgeführt werden:
- ein sich nach außen von der Entleervorrichtung (1) weg erstreckendes offenes Ende (24) des Verbindungsteilrests (23) wird nach innen in Richtung eines Innenraums (25) der Entleervorrichtung (1) gefaltet;
- ein neues Verbindungsteil (22) wird durch den Ringflansch (4) geführt und mit seinem offenen Ende (27) außen über den Flanschanschluss (3) gestülpt, sodass das neue Verbindungsteil (22) den nach innen gefalteten Verbindungsteilrest (23) umhüllt;
- der Ringflansch (4) wird in Richtung des Flanschanschlusses (3) in die Entnahmeposition verlagert;
- der Außenblähdichtring (7) wird vollaktiviert und das Verbindungsteil (22) dichtend zwischen dem Außenblähdichtring (7) und dem Flanschanschluss (3) festgelegt;
- der Nutblähdichtring (14) wird deaktiviert, sodass der Verbindungsteilrest (23) nicht mehr in der Ringnut (12) festgelegt ist;
- der Verbindungsteilrest (23) wird aus der Entleervorrichtung (1) ausgeschleust;
- der Innenblähdichtring (9) wird teilaktiviert, sodass ein von dem Innenblähdichtring (9) ausgeübter Anpressdruck ausreicht, um eine Dichtwirkung zwischen dem Verbindungsteil (22) und dem Flanschanschluss (3) zu erreichen und gleichzeitig gering genug ist, um den Innenblähdichtring (9) über das Verbindungsteil (22) gleiten lassen zu können;
- der Außenblähdichtring (7) wird deaktiviert oder teilaktiviert;
- der Ringflansch (4) wird weiter in Richtung des Flanschanschlusses (3) verlagert, wobei das Verbindungsteil (22) durch den Eindrücksteg (18) in die Ringnut (12) eine Falte bildend eingedrückt wird;
- der Nutblähdichtring (14) wird vollaktiviert, sodass das Verbindungsteil (22) in der Ringnut (12) unverlagerbar festgelegt ist;
- der erste Behälter (20) wird durch das Verbindungsteil (22) in den zweiten Behälter (21) entleert.

2. Verfahren gemäß Anspruch 1, **dadurch gekennzeichnet, dass** der Innenblähdichtring (9) vollaktiviert wird, nachdem das Verbindungsteil (22) durch den Eindrücksteg (18) in die Ringnut (12) eine Falte bildend eingedrückt wurde und bevor der erste Behälter (20) durch das Verbindungsteil (22) in den zweiten Behälter (21) entleert wird.

3. Verfahren gemäß Anspruch 1 oder Anspruch 2, **dadurch gekennzeichnet, dass** der Außenblähdichtring (7) teilaktiviert oder vollaktiviert wird, nachdem das Verbindungsteil (22) durch den Eindrücksteg (18) in die Ringnut (12) eine Falte bildend eingedrückt wurde und bevor der erste Behälter (20) durch das Verbindungsteil (22) in den zweiten Behälter (21) entleert wird.

4. Verfahren gemäß einem der voranstehenden Ansprüche, **dadurch gekennzeichnet, dass** die Deaktivierung des Nutblähdichtrings (14) gleichzeitig mit der Vollaktivierung des Außenblähdichtrings (7) erfolgt.

5. Verfahren gemäß einem der voranstehenden Ansprüche, **dadurch gekennzeichnet, dass** die Teilaktivierung des Innenblähdichtrings (9) gleichzeitig mit der Deaktivierung oder Teilaktivierung des Außenblähdichtrings (7) erfolgt.

6. Verfahren gemäß einem der voranstehenden Ansprüche, **dadurch gekennzeichnet, dass** vor der Vollaktivierung des Nutblähdichtrings (14) der Ringflansch (4) entgegen der Füllrichtung (2) in die Entnahmeposition verlagert wird.

7. Verfahren gemäß Anspruch 6, **dadurch gekennzeichnet, dass** vor der Verlagerung des Ringflansch (4) in die Entnahmeposition der Nutblähdichtring (14) teilaktiviert wird, sodass das Verbindungsteil (22) bei der Verlagerung des Ringflansch (4) in der Ringnut (12) zurückgehalten wird, während der Eindrücksteg (18) aus der Ringnut (12) heraus verlagert wird.

8. Verfahren gemäß einem der voranstehenden Ansprüche, **dadurch gekennzeichnet, dass** das neue Verbindungsteil (22) bis zu einer an einer Außenfläche der Entnahmevorrichtung (1) angebrachten Markierung über den Flanschanschluss (3) gestülpt wird.

9. Verfahren gemäß einem der voranstehenden Ansprüche, **dadurch gekennzeichnet, dass** ein über den Flanschanschluss (3) hinausragender Endabschnitt des neuen Verbindungsteils (22) mindestens die zweifache Länge einer Tiefe der Ringnut (12) ist.

10. Verfahren gemäß einem der voranstehenden Ansprüche, **dadurch gekennzeichnet, dass** nach dem Entleeren an dem Verbindungsteil (22) entgegen der Füllrichtung (2) beabstandet zu dem Ringflansch (4) ein Verschlusselement (29) angebracht wird, wobei durch das Verschlusselement (29) zwei durch einen Trennabschnitt des Verbindungsteils (22) beabstandete staubdichte Verschlüsse des Verbindungsteils (22) hergestellt werden können.

11. Verfahren gemäß Anspruch 10, **dadurch gekennzeichnet, dass** das Verbindungsteil (22) in dem Trennabschnitt durchtrennt wird.
